# EUROPÄISCHE PATENTSCHRIFT

(11) **EP 0 727 331 B1**
(45) Veröffentlichungstag und Bekanntmachung des Hinweises auf die Patenterteilung: **15.07.1998**
(21) Anmeldenummer: 96102063.3
(22) Anmeldetag: 13.02.1996
(51) Int. Cl.: B60J 7/22, B60J 7/053

(54) **Fahrzeugdach mit zwei Deckelelementen**
Two-panel vehicle roof
Toit de véhicule avec deux panneaux

(30) Priorität: 15.02.1995 DE 19505006
(43) Veröffentlichungstag der Anmeldung: 21.08.1996
(73) Patentinhaber: WEBASTO KAROSSERIESYSTEME GmbH, D-82131 Stockdorf (DE)
(72) Erfinder: Ulbrich, Thomas, 86916 Kaufering (DE); Wikelski, Thomas, 82266 Schlagenhofen (DE); Mayer, Johann, 85238 Petershausen (DE); Kraschienski, Olaf, 81243 München (DE); Toduta, Cho, 82110 Germering (DE)
(74) Vertreter: Wiese, Gerhard

(56) Entgegenhaltungen:
- GB-A- 2 147 943
- GB-A- 2 174 047
- GB-A- 2 199 797
- GB-A- 2 251 223

## Beschreibung

Die Erfindung betrifft ein Fahrzeugdach mit Zwei eine Dachöffnung wahlweise verschließenden oder wenigstens teilweise freigebenden Deckelelementen, von denen das vordere als Windabweislamelle ausgebildet ist, welche um eine nahe ihrer Vorderkante angeordnete Schwenkachse schwenkbar und mit ihrer Hinterkante über das feste Fahrzeugdach ausstellbar ist und von denen das hintere Deckelelement als Schiebedeckel ausgebildet ist, der mittels einer Absenkmechanik unter das feste Fahrzeugdach absenkbar und der an längs von dachfesten Führungsschienen verschiebbaren Gleitelementen unter das feste Fahrzeugdach verfahrbar ist, wobei Windabweislamelle und Schiebedeckel mittels eines gemeinsamen Antriebes betätigbar sind.

Aus der DE 35 22 781 A1 ist ein gattungsgemäßes Fahrzeugdach bekannt, bei dem das vordere Deckelelement durch eine im Bereich der Schwenkachse angeordnete Feder ausstellbar und gegen deren Druck von einem Gleitelement des Schiebedeckels absenkbar ist. Nachteilig bei dieser Anordnung ist, daß die Windabweislamelle lediglich durch die Kraft der Feder in ausgestelltem Zustand gehalten wird, so daß die Feder, um auch starken Windkräften standhalten zu können, entsprechend stark ausgebildet sein muß, was sich jedoch nachteilig beim Schließen der Windabweislamelle durch die erhöhten aufzubringenden Antriebskräfte auswirkt. Dasselbe gilt auch für eine andere, aus der DE 40 40 825 C2 bekannte gattungsgemäße Ausführungsform eines Fahrzeugdaches.

Der vorliegenden Erfindung liegt die Aufgabe zugrunde, ein Fahrzeugdach mit zwei eine Dachöffnung wahlweise verschließenden oder wenigstens teilweise freigebenden Deckelelementen so auszulegen, daß auch die Windabweislamelle als vorderes Deckelelement vom einzigen Antrieb während ihrer Ausstell- und Absenkbewegung zwangsgesteuert wird.

Diese Aufgabe wird durch die im Patentanspruch 1 angegebenen Mittel gelöst. Durch das Vorsehen vorderer und hinterer Hilfsgleitelemente, welche durch Riegelsteine mit einem vorderen oder hinteren Gleitelement des Schiebedeckels oder mit einem dachfesten Teil koppelbar sind und dadurch, daß eine Ausstellmechanik der Windabweislamelle am vorderen Hilfsgleitelement angelenkt ist, wird eine zwangsweise, jedoch vom Bewegungsablauf her unabhängige Ansteuerung der beiden Deckelelemente mittels eines einzigen gemeinsamen Antriebes unter Verzicht auf jegliche Federmittel ermöglicht. Durch das wahlweise Koppeln der Riegelsteine mit einem dachfesten Teil wird gleichzeitig eine sichere Verriegelung der Windabweislamelle in Ausstellposition und eine Verriegelung des gesamten öffnungsfähigen Fahrzeugdaches in der Schließposition gewährleistet. Das Vorsehen einzelner Riegelsteine zum phasenweisen Verriegeln eines Gleitelementes eines verschiebbaren Deckelteiles mit einem dachfesten Teil ist dabei für sich gesehen beispielsweise aus der DE-C1-42 00 724 bekannt. Vorteilhafte Ausgestaltungen der Erfindung sind den Unteransprüchen zu entnehmen.

Gemäß einer vorteilhaften Ausgestaltung ist das vordere Gleitelement mit einer Führung für die Absenkmechanik des Schiebedeckels versehen, welche einen Leerweg für die Relativbewegung des vorderen Hilfsgleitelementes aufweist.

Vorteilhaft ist es ferner, daß ein vorderer Riegelstein bei vollständig geschlossenem Dach das vordere Hilfsgleitelement mit dem vorderen Gleitelement verbindet und bei vollständig ausgestellter Windabweislamelle diese Verriegelung freigibt und das vordere Hilfsgleitelement mit einem dachfesten Teil verriegelt. Durch die Verbindung zum festen Dach in vollständig ausgestelltem Zustand der Windabweislamelle ist diese auch bei einer Abkoppelung von der Mechanik des Schiebedeckels stets stabil abgestützt.

Gemäß einer weiteren vorteilhaften Ausgestaltung ist ein hinterer Riegelstein vorgesehen, der bei vollständig geschlossenem Schiebedeckel das hintere Gleitelement mit einem dachfesten Teil verriegelt und bei vollständig ausgestellter Windabweislamelle diese Verriegelung freigibt und das hintere Hilfsgleitelement mit dem hinteren Gleitelement verriegelt. Hierdurch ist der Schiebedeckel in Schließposition und während des Öffnungsvorganges der Windabweislamelle besonders stabil mit dem festen Dach verriegelt und diese Verriegelung wird erst aufgelöst, wenn die Absenkbewegung für eine Schiebebewegung nach hinten beginnt.

Eine weitere vorteilhafte Ausgestaltung sieht vor, daß die Absenkmechanik am hinteren Gleitelement einen in einer dachfesten Hilfsführung geführten Hebel umfaßt, der der Hinterkante des Schiebedeckels beim Absenken eine nach vorne gerichtete Bewegungskomponente aufzwingt. Bei einer derartigen Ausgestaltung der Mechanik kann die Hinterkante des Schiebedeckels so ausgebildet sein, daß sie die angrenzende Kante des festen Daches teilweise überlappt. Da die Absenkung des Schiebedeckels erst bei vollständig geöffneter Windabweislamelle erfolgt, steht an der Vorderkante des Schiebedeckels nach vollständigem Ausstellen der Windabweislamelle genügend Freiraum für diese Schwenkbewegung zur Verfügung. Für eine derartige Absenkmechanik ist es ferner vorteilhaft, daß der Hebel derselben einen Steuerbolzen aufweist, der im Zusammenwirken mit einer dachfesten Anhebekulisse einen mit dem Schiebedeckel verbundenen Bolzen beim Verfahren des Schiebedeckels aus der geöffneten in die geschlossene Position zwangsweise in die Hilfsführung einführt.

Nachfolgend ist ein Ausführungsbeispiel der Erfindung anhand der Zeichnung beschrieben. Es zeigt:
- Fig. 1: einen schematischen Längsschnitt durch ein Fahrzeugdach bei geschlossenen Deckelelementen,
- Fig. 2: die Ausstellmechanik der Windabweislamelle und das vordere Gleitelement des Schiebedeckels bei geschlossenem Dach,
- Fig. 3: die Absenkmechanik des Schiebedeckels mit hinterem Gleitelement bei geschlossenem Dach,
- Fig. 4: eine Darstellung entsprechend Fig. 2 mit vollständig ausgestellter Windabweislamelle,
- Fig. 5: eine Darstellung entsprechend Fig. 3 mit teilweise abgesenkter Hinterkante des Schiebedeckels,
- Fig. 6: eine Darstellung entsprechend Fig. 5 mit vollständig abgesenktem und teilweise nach hinten verfahrenem Schiebedeckel,
- Fig. 7: einen Schnitt längs der Linie IV-IV zur Verdeutlichung des vorderen Hilfsgleitelements und des vorderen Gleitelements und eines mit dem vorderen Riegelstein zusammenwirkenden Riegelschiebers.

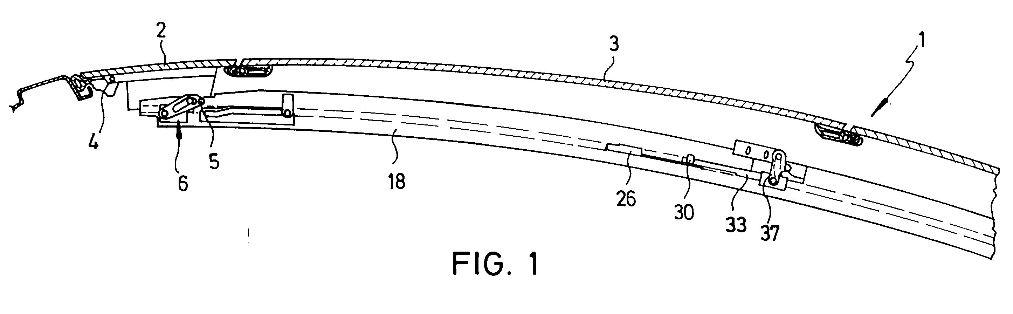

In Fig. 1 ist ein Fahrzeugdach insgesamt mit 1 bezeichnet, das eine Dachöffnung aufweist, die mittels zweier Deckelelemente wahlweise verschließbar oder zumindestens teilweise freigebbar ist. Die Deckelelemente werden von einer Windabweislamelle 2 und einem in Fahrtrichtung dahinter angeordneten Schiebedeckel 3 gebildet. Die Windabweislamelle 2 ist nahe ihrer Vorderkante mit einer Schwenkachse 4 seitlich im Bereich der Dachöffnung mit dem festen Fahrzeugdach schwenkbar verbunden. Sie ist zum anderen über einen nahe ihrer Hinterkante angeordneten Bolzen 5 mit einer Ausstellmechanik 6 verbunden. Die Ausstellmechanik 6 umfaßt einen Ausstellhebel 7, der an seinem dem Bolzen 5 gegenüberliegenden Ende mittels eines Bolzens 12 schwenkbar an einem vorderen Hilfsgleitelement 13 angelenkt ist. Zwischen den Bolzen 5 und 12 weist der Ausstellhebel 7 einen längsverlaufenden Kulissenschlitz 8 auf, in welchen ein Gleitstein 9 gleitend eingreift. Der Gleitstein 9 ist seinerseits mittels eines Bolzens 10 mit einem Lagerbock 11 verbunden, der am festen Fahrzeugdach seitlich befestigt ist.

Das vordere Hilfsgleitelement 13 ist in einer seitlich der Dachöffnung in Längsrichtung verlaufenden Führungsschiene 18 verschiebbar geführt. Es weist einen senkrecht zur Bewegungsrichtung in der Führungsschiene 18 verlaufenden Schlitz 14 auf, in welchem ein vorderer Riegeltstein 15 senkrecht zur Führungsschiene 18 verschiebbar gelagert ist. Der vordere Riegelstein 15 weist an seiner in Fahrtrichtung vorn liegenden Fläche oben eine schräg nach hinten geneigte obere Steuerflanke 16 und unten eine ebenfalls schräg nach hinten geneigte untere Steuerflanke 17 auf.

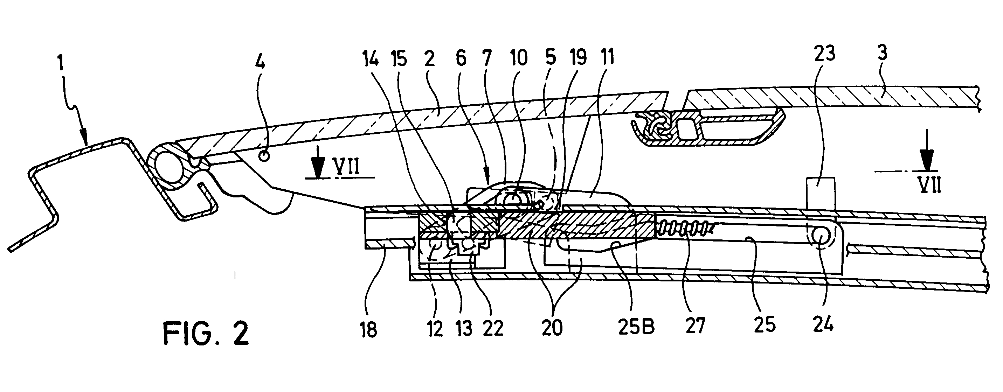

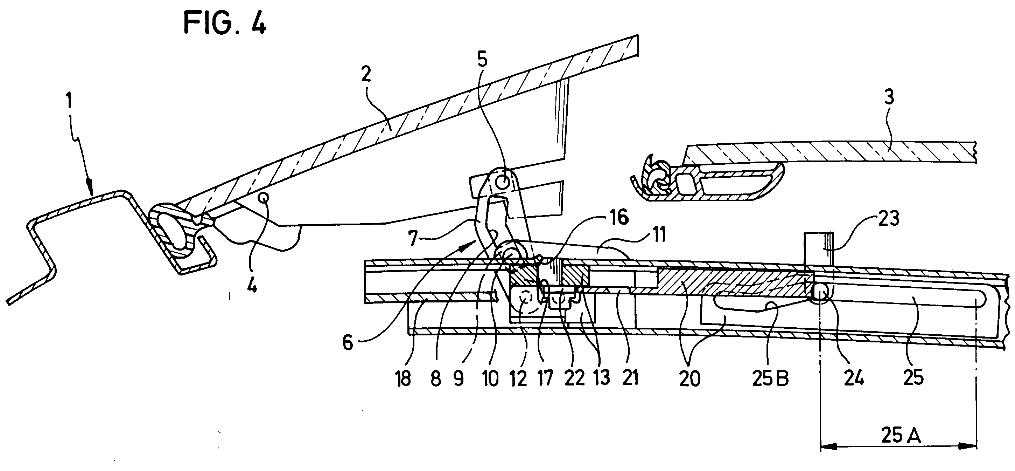

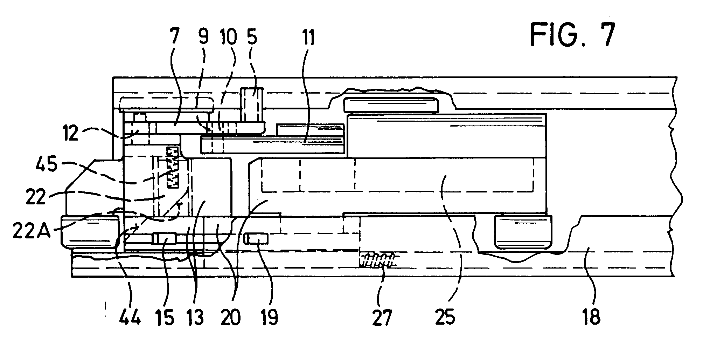

In der Führungsschiene 18 ist in Fahrtrichtung hinter dem vorderen Hilfsgleitelement 13 ein vorderes Gleitelement 20 angeordnet. Der vordere Riegelstein 15 dient zum zwangsweisen Koppeln und Entkoppeln des vorderen Hilfsgleitelementes 13 und des vorderen Gleitelementes 20. Bei vollständig geschlossenem Dach (Fig. 2) koppelt der vordere Riegelstein das vordere Hilfsgleitelement 13 mit dem vorderen Gleitelement 20, in dem er mit seinem unteren Teil in eine Aussparung 21 am vorderen Gleitelement 20 eintaucht. Dabei liegt ein Teil der Führungsschiene 18 an der oberen Fläche des vorderen Riegelsteins 15 an und unterbindet eine Bewegung des vorderen Riegelsteins 15 nach oben. Bei einer Bewegung des vorderen Gleitelementes 20 und des mit diesem gekoppelten vorderen Hilfsgleitelementes 13 nach hinten in die in Fig. 4 dargestellte Position ermöglicht eine in der Führungsschiene 18 vorgesehene Aussparung 19 hingegen eine Bewegung des vorderen Riegelsteines 15 nach oben, die von einer mit der unteren Steuerflanke 17 zusammenarbeitenden nicht näher bezeichneten Steuerfläche am vorderen Gleitelement 20 bewirkt wird. Nach dem zwangsweisen Anheben des vorderen Riegelsteins 15 und dessen vollständigem Eintauchen in die Aussparung 19 wird ein am vorderen Gleitelement 20 vorgesehener Riegelschieber 22 aktiv, welcher horizontal quer zur Bewegungsrichtung des vorderen Hilfsgleitelementes 13 federnd beweglich an diesem angeordnet ist und verhindert, daß der Riegelstein 15 sich wieder nach unten bewegt. Der Riegelschieber 22 ist weiter unten in Verbindung mit der Fig. 7 im Detail beschrieben.

Der Schiebedeckel 3 weist nahe seiner Vorderkante an der Unterseite einen vorderen Deckelträger 23 auf, an dem ein Bolzen 24 vorgesehen ist. Der Bolzen 24 greift in eine abschnittsweise parallel zur Führungsschiene 18 verlaufende, am vorderen Gleitelement 20 vorgesehend Steuerkulisse 25 ein. Die Steuerkulisse 25 setzt sich aus einem in Fahrtrichtung vorn liegenden schräg nach hinten ansteigenden geneigten Abschnitt 25B und einem daran anschließenden parallel zur Führungsschiene 18 verlaufenden geraden Abschnitt 25A zusammen. Der Abschnitt 25A repräsentiert einen Leerweg, den das vordere Gleitelement 20 während des Ausstellvorganges der Windabweislamelle 2 gegenüber dem Bolzen 24 zurücklegt. Aufgrund der parallelen Anordnung des geraden Abschnittes 25A gegenüber der Führungsschiene 18 erfolgt in diesem Bereich noch kein Absenken der Vorderkante des Schiebedeckels 3. Dies findet erst bei einer weiteren Bewegung des vorderen Gleitelementes 20 nach hinten im Bereich des geneigten Abschnittes 25B statt. Das vordere Gleitelement 20 ist mit einem in einem Kanal der Führungsschiene 18 geführten druck- und zugfesten Antriebskabel 27 verbunden und durch dieses mit einem manuellen oder motorischen Antrieb betätigbar.

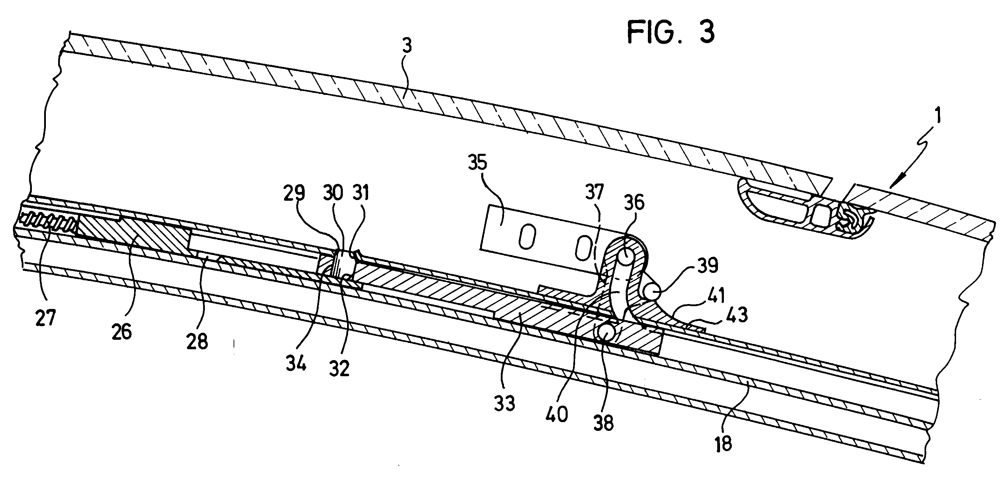

Das Antriebskabel 27 ist ferner an einem ebenfalls in der Führungsschiene 18 längs verschiebbar angeordneten hinteren Hilfsgleitelement 26 befestigt. In Fahrtrichtung hinter dem hinteren Hilfsgleitelement 26 ist ein hinteres Gleitelement 33 angeordnet, an dem eine Absenkmechanik für den Schiebedeckel 3 angelenkt ist. Das hintere Gleitelement 33 weist einen senkrecht zur Führungsschiene 18 verlaufenden Schlitz 34 auf, in dem ein hinterer Riegelstein 30 senkrecht zur Bewegungsrichtung des hinteren Gleitelementes 33 verschiebbar angeordnet ist. Der hintere Riegelstein 30 greift bei vollständig geschlossenem Dach (Fig. 3) mit seinem oberen Teil in eine Aussparung 29 ein, die an der Führungsschiene 18 vorgesehen ist. Da er gleichzeitig mit seinem mittleren Bereich mit dem hinteren Gleitelement 33 in Eingriff steht, koppelt der hintere Riegelstein 30 bei geschlossenem Schiebedeckel 3 diesen mit dem festen Fahrzeugdach 1.

Bei einer Verschiebung des hinteren Hilfsgleitelementes 26, die aufgrund der Anbindung an dasselbe Antriebskabel 27 zeitgleich mit der Verschiebung des vorderen Hilfsgleitelementes 13 aus der in Fig. 2 gezeigten Position in die in Fig. 4 gezeigte Position erfolgt, gelangt eine im hinteren Hilfsgleitelement 26 vorgesehene Aussparung 28 unter den hinteren Riegelstein 30, sodaß dieser sobald das hintere Hilfsgleitelement 26 an das hintere Gleitelement 33 anläuft und dieses mit nach hinten bewegt, durch eine in Fahrtrichtung hinten an der Oberseite liegende schräg nach vorne geneigte obere Steuerflanke 31 und eine nicht näher bezeichnete, zu dieser komplementäre Steuerflanke an der Aussparung 29 zwangsweise nach unten bewegt wird. Dabei gibt der hintere Riegelstein 30 die Verbindung mischen hinterem Gleitelement 33 und der Führungsschiene 18 frei und koppelt gleichzeitig das hintere Gleitelement 33 mit dem hinteren Hilfsgleitelement 26.

Der Schiebedeckel 3 ist nahe seiner Hinterkante an der Unterseite mit einem hinteren Deckelträger 35 versehen, an welchem ein Bolzen 36 befestigt ist. Der Bolzen 36 ist schwenkbar mit einem Hebel 37 verbunden, der an seinem gegenüberliegenden Ende über einen Bolzen 38 schwenkbar am hinteren Gleitelement 33 angelenkt ist. Der Hebel 37 weist ferner einen Steuerbolzen 39 auf, der mit einer dachfesten Anhebekulisse 41 zusammenwirkt, welche gemeinsam mit einem in Schließposition unterhalb des Steuerbolzens 39 angeordneten Anschlag 42 an einem mit der Führungsschiene 18 verbundenen Steuerteil 43 angeordnet ist. Das Steuerteil 43 weist ferner eine bogenförmig von oben nach hinten verlaufende Steuerkulisse 40 auf, welche den Bolzen 36 führt.

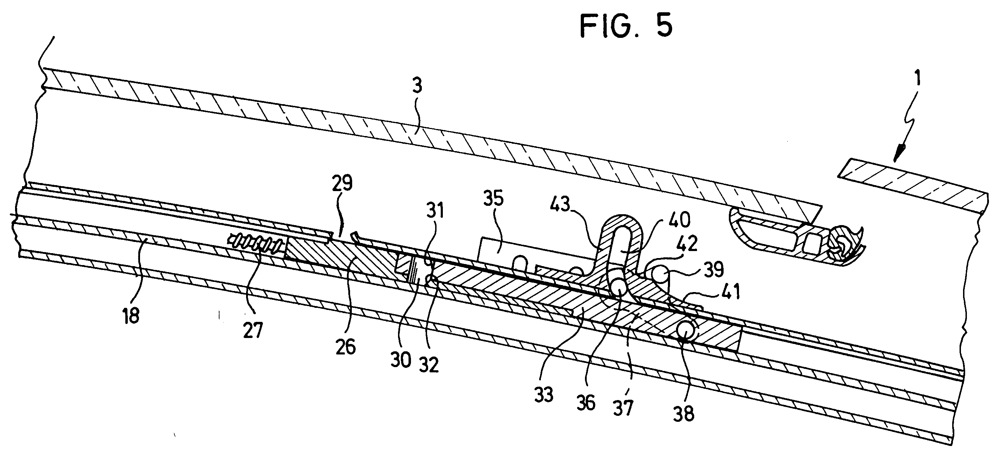

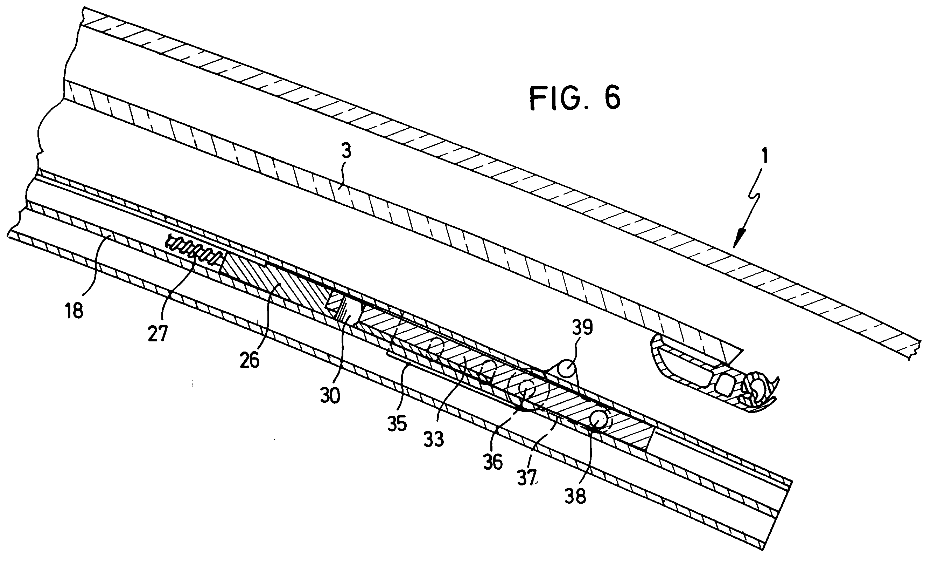

Bei einer Bewegung des hinteren Gleitelements 33 von der in Fig. 3 dargestellten Position in die in Fig. 5 dargestellte Position zieht das hintere Gleitelement 33, welches seinerseits vom hinteren Hilfsgleitelement 26 nach hinten geschoben wird, den Bolzen 38 nach hinten. Die Steuerkulisse 40 zwingt dabei über den Bolzen 36 und den hinteren Deckelträger 35 der Hinterkante des Schiebedeckels 3 eine nach vorne gerichtete Bewegungskomponente auf. Dabei wird gleichzeitig die Vorderkante des Schiebedeckels 3 durch den geneigten Abschnitt 25B und den in diesen eingreifenden Bolzen 24 nach unten bewegt. Nachdem sich der Hebel 37 vollständig nach unten geschwenkt hat, wobei die Bolzen 38 und 36 auf gleicher Höhe in der Führungsschiene geführt werden, ist der Schiebedeckel 3 soweit abgesenkt, daß er nach hinten unter das feste Fahrzeugdach 1 verfahren werden kann. Der Steuerbolzen 39 ist dabei auf der Anhebekulisse 41 nach unten geglitten. Die Position mit vollständig nach unten geschwenktem Hebel 37 und teilweise nach hinten gefahrenem Schiebedeckel 3 ist in Fig. 6 dargestellt.

In Fig. 7 sind das vordere Gleitelement 20 und das vordere Hilfsgleitelement 13 bei geschlossener Windabweislamelle 2 und geschlossenem Schiebedeckel 3 in der Draufsicht dargestellt. In dieser Position koppelt der vordere Riegelstein 15 das vordere Hilfsgleitelement 13 mit dem vorderen Gleitelement 20. Der Riegelschieber 22 wird von einer Druckfeder 45 in Richtung auf den Riegelstein 15 federnd vorgespannt. Beim Verfahren in die Ausstellposition der Windabweislamelle 2 zieht das vordere Gleitelement 20 über den Riegelstein 15 das vordere Hilfsgleitelement 13 soweit nach hinten (d.h. in Fig. 7 nach rechts), bis der Riegelstein 15 unter die Aussparung 19 in der Führungsschiene 18 gelangt. Hier wird der Riegelstein 15 zwangsweise durch die untere Steuerflanke 17 beim weiteren Verfahren des vorderen Gleitelementes 20 nach oben in Eingriff mit der Aussparung 19 gebracht. Eine an der Vorderseite eines vorspringenden Teils des vorderen Gleitelementes 20 vorgesehene schräge Steuerfläche 44 ermöglicht dabei einer komplementär dazu angeschrägten Steuerfläche 22A am Riegelschieber 22, daß sich dieser unter dem Druck der Drockfeder 45 auf den Riegelstein 15 zu bewegt und diesen schließlich untergreift, sodaß der Riegelstein 15 im Eingriff mit der Aussparung 19 gehalten wird. Beim Verfahren des vorderen Gleitelementes 20 nach vorn drückt die Steuerfläche 44 über die Steuerfläche 22A den Riegelschieber 22 entgegen dem Federdruck nach innen, sodaß dieser wieder eine Bewegung des Riegelsteins 15 nach unten für eine Kopplung von vorderem Hilfsgleitelement 13 und vorderem Gleitelement 20 freigibt.

Im folgenden wird ein Öffnungs- und Schließvorgang des Fahrzeugdaches beschrieben. Bei vollständig geschlossenem Fahrzeugdach koppelt der hintere Riegelstein 30 das hintere Gleitelement 33 durch Eingriff in die Aussparung 29 mit der Führungsschiene 18. Der vordere Riegelstein 15 koppelt gleichzeitig das vordere Hilfsgleitelement 13 mit dem vorderen Gleitelement 20 durch Eingriff in dessen Aussparung 21. Wenn nun der nicht dargestellte Antrieb das Antriebskabel 27 nach hinten, d.h. in den Zeichnungen nach rechts bewegt, so zieht das vordere Gleitelement 20 das vordere Hilfsgleitelement 13 nach hinten. Dabei sorgt der Ausstellhebel 7 durch das Verschieben des Bolzens 12 nach hinten und den gleichzeitigen Eingriff des schwenkbar mit dem festen Lagerbock 11 gekoppelten Gleitsteines 9 in den Kulissenschlitz 8 für ein Aufstellen der Hinterkante der Windabweislamelle 2 in die in Fig. 4 dargestellte Position. Gleichzeitig legt das vordere Gleitelement 20 gegenüber dem Bolzen 24 einen dem geraden Abschnitt 25A entsprechenden Leerweg zurück. Durch die gleichzeitige Anbindung an dasselbe Antriebskabel 27 wird im selben Zeitraum auch das hintere Hilfsgleitelement 26 um den selben Weg nach hinten auf das hintere Gleitelement 33 zu bewegt.

Sobald der vordere Riegelstein 15 unter der Aussparung 19 in der Führungsschiene 18 und der hintere Riegelstein 30 über der Aussparung 28 im hinteren Hilfsgleitelement 26 angekommen sind, werden diese zwangsweise in diese Aussparungen bewegt. Dabei hebt der vordere Riegelstein 15 die Koppelung zwischen vorderem Hilfsgleitelement 13 und vorderem Gleitelement 20 auf und koppelt gleichzeitig das vordere Hilfsgleitelement 13 mit der Führungsschiene 18. Die Windabweislamelle 2 wird dadurch in der in Fig. 4 dargestellten vollständig ausgestellten Position fest mit der Führungsschiene verriegelt.

Zum selben Zeitpunkt hebt der hintere Riegelstein 30 die Verriegelung des hinteren Gleitelementes 33 mit der Führungsschiene 18 auf und koppelt gleichzeitig das hintere Gleitelement 33 mit dem hinteren Hilfsgleitelement 26. Beim weiteren Verfahren nach hinten wird die Absenkmechanik an der Deckelhinterkante in der bereits vorstehend beschriebenen Weise wirksam. In dieser Phase schiebt das hintere Hilfsgleitelement 26 das hintere Gleitelement 33 nach hinten bis der Schiebedeckel 3 vollständig unter den hinteren Teil des festen Fahrzeugdaches 1 verfahren ist.

Beim Schließvorgang zieht das hintere Hilfsgleitelement 26 durch die Kopplung mittels des hinteren Riegelsteins 30 das hintere Gleitelement 33 solange mit nach vorne, bis über dem hinteren Riegelstein 30 die Aussparung 29 in der Führungsschiene 18 ein Ausweichen des hinteren Riegelsteins 30 nach oben ermöglicht. In dieser Position wird eine an der hinteren Flanke des hinteren Riegelsteines 30 an der Unterseite schräg nach vorne geneigte untere Steuerflanke 32 von einer dazu komplementären Fläche am hinteren Hilfsgleitelement 26 zwangsweise nach oben gedrückt. Der hintere Riegelstein 30 wird dadurch vom hinteren Hilfsgleitelement 26 zwangsweise entkoppelt und koppelt gleichzeitig wieder das hintere Gleitelement 33 mit der Aussparung 29 in der Führungsschiene 18.

Bevor dies geschieht, ist zum Anheben der Deckelhinterkante der Steuerbolzen 39 auf die dachfeste Anhebekulisse 41 aufgelaufen und hat dabei den Bolzen 36 in die nach unten und hinten geneigte Steuerkulisse 40 eingeführt. Dadurch wird der Hebel 37, an dem die Deckelhinterkante über dem Bolzen 36 angeordnet ist, bei einem weiteren nach vorne Ziehen des Bolzens 38 zwangsweise nach oben geschwenkt. Da sich parallel hierzu das vordere Gleitelement 20 aufgrund der Kopplung mit dem selben Antriebskabel 27 um einen entsprechenden Betrag nach vorne bewegt, wird parallel dazu über die Bewegung des Bolzens 24 entlang des geneigten Abschnittes 25B der Steuerkulisse 25 die Deckelvorderkante nach oben angehoben.

Zeitgleich zur Entkoppelung des hinteren Riegelsteines 30 vom hinteren Hilfsgleitelement 26 erfolgt das Entkoppeln des vorderen Riegelsteines 15 von der Aussparung 19 in der Führungsschiene 18. Dies geschieht dadurch, daß das vordere Gleitelement 20 an das vordere Hilfsgleitelement 13 anläuft, wobei die obere Steuerflanke 16 von der komplementär dazu geformten nicht näher bezeichneten Flanke der Aussparung 19 nach unten gedrückt wird. Gleichzeitig dazu öffnet der Riegelschieber 22 und ermöglicht dem Riegelstein 15 das Eintreten nach unten in die Aussparung 21 im vorderen Gleitelement 20. Somit sind vorderes Hilfsgleitelement 13 und vorderes Gleitelement 20 während der weiteren Bewegung nach vorne zum Absenken der Windabweislamelle 2 wieder zwangsweise miteinander gekoppelt.

Mit dem vorstehend beschriebenen Fahrzeugdach ist eine einfache Möglichkeit angegeben, zwei Deckelelemente mittels eines einzigen Antriebes unabhängig voneinander und dennoch zwangsweise sicher anzusteuern.

### Bezugszeichenliste

- 1: Fahrzeugdach
- 2: Windabweislamelle
- 3: Schiebedeckel
- 4: Schwenkachse (von 2)
- 5: Bolzen (an 2)
- 6: Ausstellmechanik (für 2)
- 7: Ausstellhebel
- 8: Kulissenschlitz (an 7)
- 9: Gleitstein
- 10: Bolzen
- 11: Lagerbock
- 12: Bolzen
- 13: vorderes Hilfsgleitelement
- 14: Schlitz (in 13)
- 15: vorderer Riegelstein
- 16: obere Steuerflanke (an 15)
- 17: untere Steuerflanke (an 15)
- 18: Führungsschiene
- 19: Aussparung (in 18)
- 20: vorderes Gleitelement
- 21: Aussparung (in 20)
- 22: Riegelschieber
- 22A: Steuerfläche (an 22)
- 23: vorderer Deckelträger
- 24: Bolzen
- 25: Steuerkulisse
- 25A: Leerweg
- 25B: geneigter Abschnitt (von 25)
- 26: hinteres Hilfsgleitelement
- 27: Antriebskabel
- 28: Aussparung (an 26)
- 29: Aussparung (in 18)
- 30: hinterer Riegelstein
- 31: obere Steuerflanke (an 30)
- 32: untere Steuerflanke (an 30)
- 33: hinteres Gleitelement
- 34: Schlitz (in 33)
- 35: hinterer Deckelträger
- 36: Bolzen
- 37: Hebel
- 38: Bolzen (an 37)
- 39: Steuerbolzen (an 37)
- 40: Steuerkulisse
- 41: Anhebekulisse
- 42: Anschlag
- 43: Steuerteil
- 44: Steuerfläche (an 20)
- 45: Druckfeder

## Patentansprüche

1. Fahrzeugdach (1) mit zwei eine Dachöffnung wahlweise verschließenden oder wenigstens teilweise freigebenden Deckelelementen (2,3), von denen das vordere als Windabweislamelle (2) ausgebildet ist, welche um eine nahe ihrer Vorderkante angeordnete Schwenkachse (4) schwenkbar und mit ihrer Hinterkante über das feste Fahrzeugdach (1) ausstellbar ist und von denen das hintere Deckelelement als Schiebedeckel (3) ausgebildet ist, der mittels einer Absenkmechanik (Hebel 37, Bolzen 36, Steuerkulisse 40; Bolzen 24, Steuerkulisse 25) unter das feste Fahrzeugdach (1) absenkbar und der an längs von dachfesten Führungsschienen (18) verschiebbaren Gleitelementen (20,33) unter das feste Fahrzeugdach (1) verfahrbar ist, wobei Windabweislamelle (2) und Schiebedeckel (3) mittels eines gemeinsamen Antriebes (Antriebskabel 27) betätigbar sind, **dadurch gekennzeichnet,** daß der Schiebedeckel (3) ein vorderes und ein hinteres Gleitelement (20 bzw. 33) aufweist, an dem die Absenkmechanik (Hebel 37, Bolzen 36, Steuerkulisse 40; Bolzen 24, Steuerkulisse 25) angelenkt ist, und daß ferner relativ zu den Gleitelementen (20 bzw. 33) bewegbare vordere und hintere Hilfsgleitelemente (13 bzw. 26) vorgesehen sind, die mittels senkrecht zur Bewegungsrichtung der Gleitelemente (20 bzw. 33) bewegbarer Riegelsteine (15,30) selbsttätig mit dem jeweiligen Gleitelement (20 bzw. 33) oder mit einem dachfesten Teil (Führungsschiene 18) koppelbar sind, wobei am vorderen Hilfsgleitelement (13) gleichzeitig eine Ausstellmechanik (6) der Windabweislamelle (2) angelenkt ist.

2. Fahrzeugdach nach Anspruch 1, **dadurch gekennzeichnet,** daß das vordere Gleitelement (20) mit einer Führung (Steuerkulisse 25) für die Absenkmechanik (6) des Schiebedeckels (3) versehen ist, die einen Leerweg (25A) für die Relativbewegung des vorderen Hilfsgleitelementes (13) aufweist.

3. Fahrzeugdach nach Anspruch 1 oder 2, **dadurch gekennzeichnet,** daß ein vorderer Riegelstein (15) bei vollständig geschlossenem Dach das vordere Hilfsgleitelement (13) mit dem vorderen Gleitelement (20) verbindet und bei vollständig ausgestellter Windabweislamelle (2) diese Verriegelung freigibt und das vordere Hilfsgleitelement (13) mit einem dachfesten Teil (Aussparung 19 an Führungsschiene 18) verriegelt.

4. Fahrzeugdach nach einem der vorhergehenden Ansprüche, **dadurch gekennzeichnet,** daß ein hinterer Riegelstein (30) bei vollständig geschlossenem Schiebedeckel (3) das hintere Gleitelement (33) mit einem dachfesten Teil (Aussparung 29 an Führungsschiene 18) verriegelt und bei vollständig ausgestellter Windabweislamelle (2) diese Verriegelung freigibt und das hintere Hilfsgleitelement (26) mit dem hinteren Gleitelement (33) verriegelt.

5. Fahrzeugdach nach einem der vorhergehenden Ansprüche, **dadurch gekennzeichnet,** daß die Absenkmechanik am hinteren Gleitelement (33) einen in einer dachfesten Hilfsführung (Steuerkulisse 40) geführten Hebel (37) umfaßt, der der Hinterkante des Schiebedeckels (3) beim Absenken eine nach vorne gerichtete Bewegungskomponente aufzwingt.

6. Fahrzeugdach nach Anspruch 5, **dadurch gekennzeichnet,** daß der Hebel (37) der Absenkmechanik einen Steuerbolzen (39) aufweist, der im Zusammenwirken mit einer dachfesten Anhebekulisse (41) einen mit dem Schiebedeckel (3) verbundenen Bolzen (36) beim Verfahren des Schiebedeckels (3) aus der geöffneten in die geschlossene Position zwangsweise in die Hilfsführung (Steuerkulisse 40) einführt.

## Claims

1. A vehicle roof (1) with two cover elements (2, 3) which optionally close or at least partially expose a roof opening and of which the front cover element is constructed as a wind deflector strip (2) which is mounted to pivot around a pivot axis (4) disposed close to its front edge while its rear edge can be pushed out over the fixed vehicle roof (1) and of which the rear cover element is constructed as a sliding cover (3) which is lowerable below the fixed vehicle roof (1) by a lowering mechanism (lever 37, pin 36, control slot 40, pin 24, control slot 25) and which can be moved under the fixed vehicle roof (1) on slide elements (20, 33) displaceable along guide rails (18) which are fixed to the roof, wind deflector strip (2) and sliding cover (3) being capable of being actuated by a common drive (drive cable 27), characterised in that the sliding cover (3) has a front and a rear slide element (20, 33) respectively on which the lowering mechanism (lever 37, pin 36, control slot 40, pin 24, control slot 25) is articulated and in that furthermore front and rear auxiliary slide elements (13, 26) adapted for movement in relation to the slide elements (20 and 33) are provided and which, by means of locking blocks (15, 30) adapted for movement at right-angles to the direction of movement of the slide element (20, 33) can be automatically coupled to the respective slide element (20 or 33) or to a part (guide rail 18) rigid with the roof, a push-out mechanism (6) for the wind deflector strip (2) being at the same time articulated on the front auxiliary slide element (13).

2. A vehicle roof according to Claim 1, characterised in that the front slide element (20) is provided with a guide (control slot 25) for the lowering mechanism (6) of the sliding cover (3) and which has a straight portion (25A) for relative movement of the front auxiliary slide element (13).

3. A vehicle roof according to Claim 1 or 2, characterised in that when the roof is completely closed a front locking block (15) connects the front auxiliary slide element (13) to the front slide element (20) and releases this locking engagement when the wind deflector strip (2) is fully extended and locks the front auxiliary slide element (13) to a part rigid with the roof (recess 19 on guide rail 18).

4. A vehicle roof according to one of the preceding Claims, characterised in that when the sliding cover (3) is completely closed, a rear locking block (30) locks the rear slide element (33) to a part (recess 29 on guide rail 18) rigid with the roof and, when the wind deflector strip (2) is fully extended, releases this locking arrangement and locks the rear auxiliary slide element (26) to the rear slide element (33).

5. A vehicle roof according to one of the preceding Claims, characterised in that the lowering mechanism on the rear slide element (33) comprises a lever (37) guided in an auxiliary guide (control slot 40) fixed to the roof and which, upon lowering, imposes a forwardly directed movement component on the rear edge of the sliding cover (3).

6. A vehicle roof according to Claim 6, characterised in that the lever (37) of the lowering mechanism has a control pin (39) which, in conjunction with a lifting block (41) fixed to the roof, positively introduces into the auxiliary guide (control slot 40) a pin (36) connected to the sliding cover (3) when the sliding cover (3) moves out of the open and into the closed position.

## Revendications

1. Toit de véhicule (1) dans lequel une ouverture de toit peut à volonté être obturée ou libérée en partie par deux éléments de couvercle (2, 3) dont celui situé en avant a la forme d'une lame déflectrice de vent (2) pouvant basculer autour d'un axe (4) situé près de son bord avant de manière à soulever son bord arrière au-dessus du toit (1) du véhicule, tandis que l'élément arrière de couvercle a la forme d'un couvercle coulissant (3) qui, par l'intermédiaire d'un mécanisme d'abaissement (levier 37, pivot 36, coulisse de commande 40, pivot 24, coulisse de commande 25) peut être amené en dessous du toit fixe (1) où il peut se déplacer sur des éléments de glissement (20, 23) pouvant coulisser le long de rails de guidage (18) solidaires du toit, la lame déflectrice (2) ainsi que le couvercle coulissant (3) pouvant être manoeuvrés par un entraînement commun (câble 27),
caractérisé en ce que
le couvercle coulissant (3) comporte un élément de glissement avant et un arrière (20, 23) sur lesquels sont articulés le mécanisme d'abaissement (levier 37, pivot 36, coulisse de commande 40, pivot 24, coulisse de commande 25),
il est prévu de plus des éléments auxiliaires de glissement avant et arrière (13, 26) mobiles par rapport aux éléments de glissement (20, 23) et qui peuvent être accouplés automatiquement, par l'intermédiaire de blocs de verrouillage (15, 30) mobiles perpendiculairement à la direction de déplacement des éléments de glissement (20, 30), chacun à l'élément de glissement correspondant (20, 33) ou à une pièce solidaire du toit (rail de guidage 18),
un mécanisme (6) de soulèvement de la lame déflectrice (2) est également articulé sur l'élément auxiliaire de glissement (13) situé en avant.

2. Toit de véhicule selon la revendication 1,
caractérisé en ce que
l'élément de glissement avant (20) est équipé d'un guidage (coulisse de commande 25) du mécanisme (6) d'abaissement du couvercle coulissant (3), comportant une course à vide (25A) pour le mouvement relatif de l'élément auxiliaire de glissement (13) situé en avant.

3. Toit de véhicule selon la revendication 1 ou 2,
caractérisé en ce qu'
un bloc de verrouillage (15) situé à l'avant relie l'élément auxiliaire de glissement avant (13) à l'élément de glissement avant (20) quand le toit est totalement fermé et le libère lorsque la lame déflectrice de vent (2) est totalement relevée, en même temps qu'il relie l'élément auxiliaire de glissement avant (13) à une pièce solidaire du toit (évidement 19 sur le rail de guidage 18).

4. Toit de véhicule selon une des revendications précédentes,
caractérisé en ce qu'
un bloc de verrouillage (30) monté à l'arrière relie l'élément de glissement arrière (33) à une pièce solidaire du toit (évidement 29 sur l'élément de guidage 18) lorsque le toit coulissant (3) est totalement fermé et le libère lorsque la lame déflectrice de vent (2) est totalement relevée, en même temps qu'il relie l'élément auxiliaire de glissement arrière (26) à l'élément de glissement arrière (33).

5. Toit de véhicule selon une des revendications précédentes,
caractérisé en ce que
le mécanisme d'abaissement comprend, sur l'élément arrière de glissement (33), un levier (37) qui est guidé par un guidage auxiliaire solidaire du toit (coulisse de commande 40) et qui impose au bord arrière du couvercle coulissant (3) une composante de mouvement dirigée vers l'avant, pendant l'abaissement.

6. Toit de véhicule selon la revendication 5,
caractérisé en ce que
le levier (37) du mécanisme d'abaissement comporte un pivot de commande (39) qui, en coopérant avec une coulisse de relèvement (41) solidaire du toit, oblige un pivot (36) relié au couvercle coulissant (3) lorsque celui-ci passe de la position ouverte à la position fermée, à s'engager dans le guidage auxiliaire (coulisse de commande 40).
